# EUROPEAN PATENT APPLICATION

(11) **EP 2 597 667 A1**
(43) Date of publication of application: **29.05.2013**
(21) Application number: 12194122.3
(22) Date of filing: 23.11.2012
(51) Int. Cl.: H01H 35/18

(54) **A conductivity sensing float switch**

(30) Priority: 23.11.2011 GB 201120170
(71) Applicant: Darcy Spillcare Limited, Larkfield Kent ME20 6GN (GB)
(72) Inventor: Docherty, Peter Martin, West Yorkshire, HD2 2JG (GB)
(74) Representative: Bridle, Andrew Barry

(57) **Abstract**

A conductivity sensing float switch including a buoyant body 4 adapted to float on a liquid phase, the body 4 including a microswitch 12 and a conductivity sensor 6, wherein the conductivity sensor 6 is adapted to determine if a portion of the body 4 is in contact with a conductive liquid or a non-conductive liquid.

## Description

The present invention relates to a conductivity sensing float switch and to a discriminating pump assembly including the float switch.

Float switches have long been used to control or measure the level of a specific liquid in a container. Typically, such known float switches can be found, for example, in toilet cisterns and comprise a buoyant element adapted to float at the top of the liquid, an arm and a valve or switch. When the liquid level rises or drops, the buoyant element correspondingly moves up or down and causes the angle of the arm to change. The change in angle of the arm results in the operation of the valve or switch, such as the opening or closing of the valve or the activation or inactivation of the switch.

However, there are situations where such a relatively simple switch cannot be used. One example of such a situation is a container, such as a sump or bund, in which there may be a mixture of water and oil, for example. Where the container is located outside, it may be desirable to pump out excess water, e.g. after it has rained, to prevent the volume of liquids in the container exceeding its capacity. However, if the water is to be pumped into a conventional drain, then it is necessary to prevent any oil present in the container also being pumped, as this would cause contamination of the drain water.

Furthermore, the pump may not be specified to pump oil or other hydrocarbon liquids, which could cause damage to the pump.

Therefore, there is a need for a simple switch arrangement which is sensitive not only to the level (and hence volume) of liquid within a container, but also the nature of the liquid therein.

According to a first aspect of the invention, there is provided a conductivity sensing float switch including a body adapted to float on a liquid phase, the body including a conductivity sensor, wherein the conductivity sensor is adapted to determine if a portion of the body is in contact with a conductive liquid or a non-conductive liquid. Suitably, the conductivity sensor comprises a pair of spaced apart electrical contacts.

By providing the conductivity sensor as part of the float switch body, the float switch is able to sense not only the level of the liquid, but whether or not the liquid is a conductive liquid.

For example, in a container which contains both oil and water, the float body will rise on top of the oil layer as the volume within the sump increases (this is because the organic layer has a lower specific gravity and will float on the aqueous layer). However, it may not trigger a response, as the oil is non-conductive. When, for example, the float body, reaches a maximum upward displacement from a reference point, further increase in liquid volume within the container will not cause any further displacement of the float body. If the increase in volume is due to an increase in water or other aqueous liquid, then this will eventually contact the float body. When the float body is contacted by the aqueous liquid, which is conductive, the conductivity sensor will sense this and the float switch may trigger a response to this situation.

With a pump located at the bottom of the container, it is possible to pump out only the lower, aqueous liquid and to electrically isolate the pump before the organic layer (e.g. oil) reaches the pump inlet

Accordingly, the float switch, and a pump assembly including the float switch, is able to discriminate between different liquids within a container.

The skilled person will appreciate that the float switch may include an arm, wherein the float body may conveniently be located at one end (a distal end) of the arm. The arm may further be anchored at its other (proximal) end to a suitable substrate. The anchor may form a fixed reference point.

Alternatively, the float body may be located within a substantially vertical channel or a channel located within a vertical plane. In this embodiment, the float body may rise and fall within the channel as the level of the liquid phase within the container rises and falls. The vertical displacement in this embodiment is measured from a fixed reference point, which may be the bottom of the vertical channel for example.

The conductivity sensor may be activated only when the float body reaches a specific pre-defined vertical displacement from the reference point. Thus, the float switch may further include a vertical displacement sensor adapted to determine if the body of the float switch has a vertical displacement from the reference point which is equal to or exceeds a pre-determined value. Furthermore, the vertical displacement sensor may have a first output when it is below the pre-determined value and a second output when it is equal to or exceeds the pre-determined value.

The float switch may include a vertical displacement stop which prevents the vertical displacement of the float body from the reference point exceeding a specific value.

In an embodiment of the invention, the vertical displacement sensor comprises an angular displacement sensor adapted to determine if the body of the float switch subtends an angle with respect to a reference plane which is equal to or exceeds a pre-determined angle.

In this way, the upward vertical displacement of the float body may be measured by the angle subtended between the float body and a reference point or plane, such as a horizontal plane. Such a sensor is particularly useful where the float body is tethered to an anchor via an arm such that the angle of the float body with respect to the reference plane varies as its vertical displacement varies.

The angular displacement sensor may include a mercury switch, whereby an electrical circuit is completed when the liquid mercury electrically connects a pair of spaced apart electrical contacts and the mercury completes the circuit when a given orientation angle of the float body is reached.

However, in an alternative embodiment of the invention, the angular displacement sensor includes a ball, a ball track and a microswitch, wherein the ball is rollably restrained within the track and the microswitch is located at one end of the track such that the sensor has a first configuration in which the ball engages the microswitch and a second configuration in which the ball is spaced from the microswitch. The ball track is suitably defined by elements within the float body. Thus, the ball and the microswitch are suitably located within the float body.

The skilled person will appreciate that the term "rollably restrained" means that the ball is free to roll along the track under the influence of gravity, but is unable to leave the track. Thus, it is constrained to roll linearly along the track. The direction in which the ball rolls, and its rest positions, will be determined by the orientation of the float body.

The microswitch may form one end stop of the ball track. A second end stop may be provided at the opposite end of the track to limit the permitted movement of the ball.

In such an arrangement, the microswitch typically includes a pair of spaced apart contacts at one end of the switch (the end of the switch which faces the ball) which are biased away from each other. When the ball engages the microswitch, its mass is sufficient to overcome the bias and to urge the two contacts into contact with each other, thus completing a sensing circuit and causing an output from the microswitch to change from a first output to a second, different output. However, when the ball is spaced from the microswitch, the bias between the contacts urges them apart and breaks the circuit, thereby returning the output of the switch to the first output.

In a further embodiment of the invention, the conductivity sensor forms part of a conductivity circuit which can either be active or inactive and the float switch includes a control assembly which is adapted to activate or inactivate the conductivity circuit in response to the output of the vertical displacement sensor.

Therefore, in order that electrical energy is not wasted, the conductivity circuit may remain inactive until the output from the vertical displacement sensor indicates that the upward displacement of the float body has reached or exceeded a pre-determined value. At this point, the output from the vertical displacement sensor may change from a first output (e.g. a zero output) to a second output (e.g. a non-zero output) and the control assembly may activate the conductivity circuit in response to the second (e.g. non-zero) output value from the vertical displacement sensor.

In an embodiment of the invention, the control assembly includes inputs electrically connected to both the vertical displacement sensor and the conductivity sensor, and at least one electrical output.

In this embodiment, the electrical output from the control assembly is dependent on both the output signal from the vertical displacement sensor and the conductivity sensor, as the output from these sensors form the inputs to the control assembly. The control assembly may therefore require two separate specific input signals (one from the vertical displacement sensor output and the other from the conductivity sensor output) before it outputs a pre-determined output signal. The pre-determined output signal from the control assembly may be to energise a secondary control circuit to which the control assembly is connected.

Alternatively, the control assembly may only have a single input, but that the input signal is generated by a first sensor (e.g. from the conductivity sensor), which is only activated or energised when a second sensor (e.g. the vertical displacement sensor) is in a pre-determined configuration.

In an embodiment of the invention, the control assembly has an "on" configuration in which the electrical inputs are such that the electrical output carries an output current; and the control assembly has an "off" configuration in which the electrical inputs are such that the electrical output carries no output current.

In this embodiment, the output signal is either a flow of electrical current or no electrical current.

Float bodies may have a variety of orientations that can be adopted relative to the liquid phase within a container. For example, they may be secured to a distal end of an arm and be capable of rotation relative to the longitudinal axis of the arm. Accordingly, to ensure that the float body is oriented with the conductivity sensor facing the liquid, the float body may include an orientation control element adapted to urge a pre-determined surface of the body into contact with the liquid phase. Thus, a specific surface of the float body or a specific portion of a surface is oriented to face the liquid phase.

Where the float body defines a longitudinal axis, the orientation control element may extend perpendicularly to the longitudinal axis of the body. For example, the orientation control element may be a weighted element which is adapted to depend from the float body when the float body is arranged with its longitudinal axis substantially horizontal. In this way, gravity acting on orientation control element will cause the element to extend downwards in use, thus defining a bottom surface of the float body and a top surface of the float body, wherein the bottom surface of the float body will in normal use face the liquid phase within the container.

In an embodiment of the invention, the orientation control element includes a second conductivity sensor. The output from the second conductivity sensor may form a further input for the control assembly. For example, the output signal from the control assembly may not change from "off" to "on" until the first conductivity sensor senses a conductive liquid, but once the output signal is "on", it may not change back to "off" until the second conductivity sensor no longer senses a conductive liquid. This provides a delay or hold with respect to the change of the control assembly output signal and prevents it from bouncing rapidly between "on" and "off".

According to a second aspect of the invention, there is provided a discriminating pump assembly for use in containers capable of containing both a conductive liquid and a non-conductive liquid, the pump assembly including a liquid pump and a conductivity sensing float switch as defined anywhere herein.

In an embodiment of the second aspect of the invention, the float switch includes a control assembly having at least one electrical input and an electrical output, wherein the electrical output controls the operation of the pump.

In this way, the pump may only be activated when the float switch detects a conductive liquid above a threshold level, and may only pump the conductive liquid. The pump may be shut off by the control assembly before a non-conductive liquid reaches the pump inlet.

For ease of manufacture and control, the electrical output from the control assembly may be connected to a switch, such as a solenoid switch, which controls the power supply to the pump.

The skilled person will appreciate that the connection of an electrical output from one component to another component may be a direct connection or it may be an indirect connection, for example via one or more intermediate components.

To prevent the pump rapidly oscillating between being on and off, the float switch may include a delay or hold circuit which causes the pump to continue to be energised for a pre-determined period after the power would otherwise have been removed. As such, an embodiment of the invention provides a float switch which includes a control assembly having an electrical output, wherein the output is determined by one or more input signals, and wherein the control assembly further includes a delay circuit that is adapted to maintain electrical power to the pump for a pre-determined period of time after the input signals correspond to a zero electrical current for the output.

In a further embodiment of the invention, the float switch includes an orientation control element which carries a second conductivity sensor and the second conductivity sensor forms part of the delay circuit.

As mentioned above, the output signal from the control assembly may not change from "off" to "on" until the first conductivity sensor senses a conductive liquid, but once the output signal is "on", it may not change back to "off" until the second conductivity sensor no longer senses a conductive liquid. This provides a delay or hold with respect to the change of the control assembly output signal and prevents it from bouncing rapidly between "on" and "off".

According to a third aspect of the invention, there is provided a method of pumping a conductive liquid from a container without pumping a non-conductive liquid with a lower specific gravity, the method including:
providing the container with a conductivity sensing float switch as defined anywhere herein, and a pump;
electrically energising the pump when the float switch indicates that the level of a conductive liquid has reached or exceeded a pre-determined threshold; and
electrically isolating the pump when the level of the conductive liquid falls below a second pre-determined threshold.

It should be appreciated that the terms "embodiment" and "an embodiment of the invention" are to be understood to refer to any embodiment or aspect of the invention as defined or described herein. Therefore, it should be understood that the features of specific embodiments can be combined with one or more other specific features described herein or be combined with any aspect or embodiment of the invention described herein. All such combinations of features are considered to be within the scope of the invention defined in the claims.

An embodiment of the invention will now be described, by way of example only, with reference to the accompanying drawings in which:
- Figure 1: is a plan view from below of a float forming part of a conductivity sensing float switch according to the invention;
- Figure 2a: is a cross-sectional side view of the float of Figure 1 in a downward orientation;
- Figure 2b: is a cross-sectional side view of the float of Figure 1 in an upward orientation;
- Figure 3: is a plane view from below of a float according to a second embodiment of the invention;
- Figure 4: is a side elevational view of the float of Figure 3; and
- Figures 5a to 5e: show the operation of a pump assembly including the float of Figure 1.

For the avoidance of doubt, the skilled person will appreciate that in this specification, the terms "up", "down", "front", "rear", "upper", "lower", "width", etc. refer to the orientation of the components as found in the embodiment in normal use as shown in the Figures.

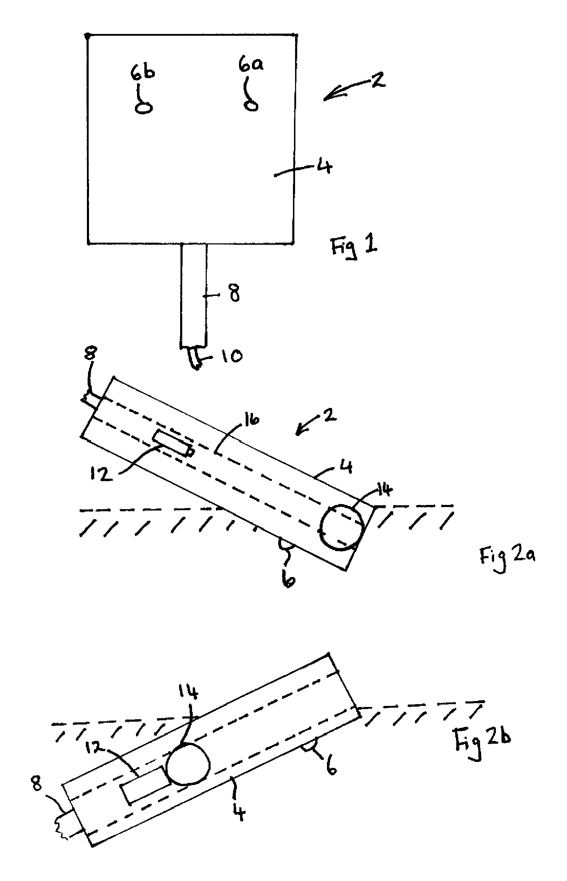

A float 2 which forms part of a conductivity sensing float switch according to the invention is shown in Figures 1, 2a and 2b.

The float 2 comprises a buoyant hollow body 4. The body carries a pair of spaced apart electrical contacts 6a, 6b located on a bottom surface of the float body 4, which are wired to an electrical conductivity sensing circuit (not shown). The electrical conductivity sensing circuit is configured to sense if the electrical contacts 6a, 6b are in contact with a conductive liquid.

The skilled person is aware of various different types of electrical circuit which are capable of determining whether or not a pair of electrical contacts is in contact with a conductive liquid. As such, the electrical conductivity sensing circuit will not be described in detail herein.

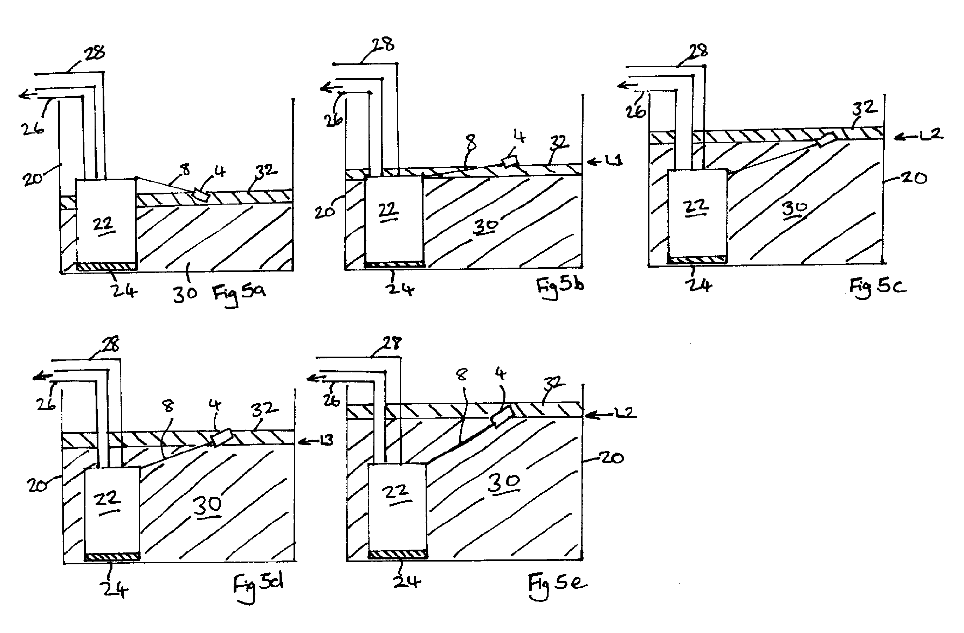

Extending rearwardly from the float body 4 is an elongate arm 8, which defines a longitudinal axis for the float body 4. The arm 8 is pivotally connected at its opposite end to an anchor point on a pump 22 (see Figures 5a-5e). The arm 8 is a hollow tube within which is located an electrical cable 10 connecting the electrical components of the float 4 with the control and detection circuits referred to herein.

As can be seen from Figures 2a and 2b, the float body 4 also has located therein a microswitch 12, a contact ball 14 and a ball track 16. The ball 14 is constrained to roll along the track between a pair of end stops, where one end stop is defined by the front end of the float body 4 (see Figure 2a) and the other end stop is defined by the microswitch 12 (see Figure 2b).

The microswitch 12 is connected to an electrical contact activation circuit (not shown) via the electrical cable 10.

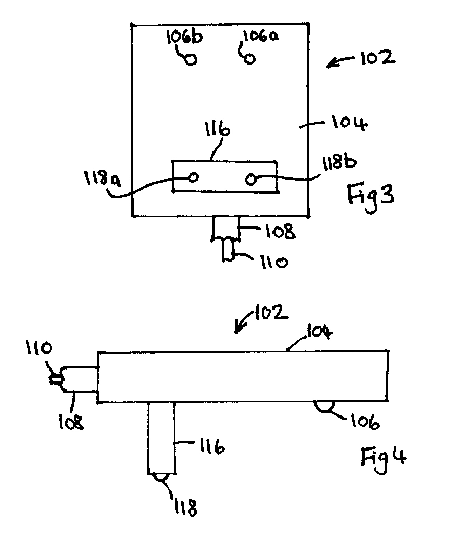

An alternative (second) embodiment of the float is shown in Figures 3 and 4. In these figures, the features which are similar to those shown in Figures 1, 2a and 2b are given the same reference numbers, but with a "100" prefix added. Thus, the float body 4 of the first embodiment of the float becomes float body 104 in the second embodiment, and so on.

The second embodiment features a float 102 comprising a float body 104 and a pair of spaced apart electrical contacts 106a, 106b located on a bottom surface of the float body 104. As with the first embodiment, the float body 104 is hingedly coupled to an anchor via an elongate arm 108, which is hollow and has located therein an electrical cable 110.

However, the float body 104 further includes a weighted orientation control element 116 extending transversely to the longitudinal axis of the float body 104, such that in use with the longitudinal axis of the float body 104 arranged horizontally, the orientation control element 116 depends downwardly from the float body 104.

Such an arrangement urges the bottom surface of the float body 104 to face downwards such that the electrical contacts 106a, 106b face a liquid upon which the float body 104 is located.

The orientation control element 116 carries a second pair of spaced apart electrical contacts 118a, 118b which are connected to a hold circuit, the purpose of which will be described hereinbelow.

The skilled person will appreciate that although not shown in Figures 3 and 4, the float body 104 of the second embodiment also includes within the body 104 a microswitch, contact ball and ball track which are identical the microswitch 12, contact ball 14 and ball track 16 of the first embodiment, both in terms of arrangement and function.

Figures 5a to 5e show the float body 4 in use.

The float body 4 forms part of a discriminating pump assembly located within a container 20 which may be a sump or a bund. The float body 4 is connected to a pump 22 via the elongate arm 8. The pump 22 includes a pump inlet 24 located at the bottom of the pump 22 and a pump outlet 26 in the form of a conduit arranged to transport excess water from the container 20 to a waste water network, such a mains drain. An electrical cable 28 connects the pump 22 to a mains electrical power source via a control assembly (not shown).

In the figures, the container 20 contains a water layer 30 located beneath a layer of oil 32.

As can be seen from Figure 5a, the depth of the oil and water layers are such that the arm 8 points downwards. In this position, the float is in a configuration as shown in Figure 2a, with the ball 14 within the float body 4 being located against an end wall of the float body 4 and spaced from the microswitch 12. Thus, the contacts of the microswitch are open. With the contacts of the microswitch open, the conductivity circuit is inactive, so it is irrelevant if the spaced apart electrical contacts 6a, 6b are in contact with a conductive or non-conductive liquid.

With the conductivity circuit inactive, the control assembly is maintained in an off configuration and there is no electrical power being supplied to the pump via the cable 28.

In the event of rain or other event that causes water to enter the container 20, the float body 4 begins to rise. This is shown in Figure 5b. In this situation, the orientation of the float body 4 changes from that shown in Figure 2a to that shown in Figure 2b. When the longitudinal axis of the float body 4 passes through a horizontal plane such that the arm 8 subtends an angle greater than 90° with respect to the pump body, the ball 14 within the float body 4 rolls along the ball track 16 under the influence of gravity until it reaches the microswitch 12. When the ball 14 contacts the microswitch 12, its mass is sufficient to close the electrical contacts located at the end of the microswitch 12 which faces the ball 14. This closure of the microswitch contacts activates the conductivity circuit. However, as can be seen from Figure 5b, at position Ll, the float body remains solely in contact with the non-conductive oil layer at this point. Accordingly, the conductivity circuit does not detect a conductive liquid and maintains the control assembly controlling the supply of electrical power to the pump in an off configuration.

The arm 8 is anchored to the pump 22 in such a way that float body 4 has a maximum vertical displacement from the bottom of the container 20. This is shown in Figure 5c. In this Figure, it can be seen that the float body 4 is no longer floating on the oil layer 32 because the level of the liquid within the container 20 has risen above the maximum vertical displacement limit of the float body 4.

As can be seen from Figure 5c, the increase in the water level causes the water to reach level L2 at which point the float body 4 contacts the water layer 30. When this happens, the spaced apart electrical contacts 6a, 6b of the conductivity circuit, which is active as a result of the microswitch 12 being closed, detects a conductive liquid. This causes the output of the conductivity circuit to change to a non-zero output and changes the control assembly controlling the electrical power supply to the pump 22 from an off configuration to an on configuration.

Thus, the pump 22 is energised and begins to pump the lower water layer out of the container via the pump output pipe 26. As the pump inlet 24 is arranged near the bottom of the pump 22, the pump 22 will only pump water 30 (or other conductive aqueous liquid) from the container 20.

With the pump 22 operational, the water level in the container 20 will drop. As shown in Figure 5d, the water level has dropped to level L3, which is below the level at which the electrical contacts 6a, 6b are in contact with the water 30. In this configuration, the conductivity circuit no longer detects that the bottom of the float body 4 is in contact with a conductive liquid and its output returns to a zero output. However, the pump remains energised for a further three seconds after the conductivity circuit returns to a zero output as a result of a delay circuit built into the pump control assembly. After the delay, the control assembly returns to its off configuration and power to the pump 22 is once again interrupted.

Assuming that it continues to rain, the water level in the container 20 will rise when the pump is not energised until the water level once again reaches level L2 (see Figure 5e). The control assembly will then cause the pump to oscillate between its energised and non-energised states as the water level within the container 20 rises and falls as shown in Figures 5d and 5e. This will continue until it stops raining.

The container 20 may include a further, conventional float switch connected to an alarm (the further float switch and alarm of this embodiment are not shown in the drawings), such that an alarm sounds if the liquid level within the container exceeds a pre-determined threshold level. Such a secondary float switch would be useful to alert those responsible for the container that the level of the non-conductive liquid within the container has exceeded a safe threshold. This would operate in cases where excess oil or other non-conductive liquid enters the container. The skilled person will appreciate that excess oil would not trigger the pump (as such, oil would not be pumped into a drain system and potentially contaminate it), as the float body 4 would not be brought into contact with a conductive liquid.

The skilled person will appreciate that the specific electrical control and detection circuits may be any known or conventional circuits and as such are not discussed in detail herein. However, the skilled person is able to construct such circuits from their own common general knowledge.

## Claims

1. A conductivity sensing float switch including a body adapted to float on a liquid phase, the body including a conductivity sensor, wherein the conductivity sensor is adapted to determine if a portion of the body is in contact with a conductive liquid or a non-conductive liquid.

2. A float switch according to Claim 1, wherein the conductivity sensor comprises a pair of spaced apart electrical contacts.

3. A float switch according to Claim 1 or Claim 2, wherein the float switch further includes a vertical displacement sensor adapted to determine if the body of the float switch has a vertical displacement from a reference point which is equal to or exceeds a pre-determined value and the vertical displacement sensor has a first output when it is below the pre-determined value and a second output when it is equal to or exceeds the pre-determined value.

4. A float switch according to Claim 3, wherein the vertical displacement sensor comprises an angular displacement sensor adapted to determine if the body of the float switch subtends an angle with respect to a reference plane which is equal to or exceeds a pre-determined angle.

5. A float switch according to Claim 4, wherein the angular displacement sensor includes a ball, a ball track and a microswitch, wherein ball is rollably restrained within the track and the microswitch is located at one end of the track such that the sensor has a first configuration in which the ball engages the microswitch and a second configuration in which the ball is spaced from the microswitch.

6. A float switch according to any of Claims 3 to 5, wherein the conductivity sensor forms part of a conductivity circuit which can either be active or inactive and the float switch includes a control assembly which is adapted to activate or inactivate the conductivity circuit in response to the output of the vertical displacement sensor.

7. A float switch according to Claim 6, wherein the control assembly includes one or more inputs generated from the vertical displacement sensor and the conductivity sensor, and at least one electrical output.

8. A float switch according to Claim 7, wherein the control assembly has an on configuration in which the electrical inputs are such that the electrical output carries an output current; and the control assembly has an off configuration in which the electrical inputs are such that the electrical output carries no output current.

9. A float switch according to any preceding claim, wherein the body includes an orientation control element adapted to urge a pre-determined surface of the body into contact with the liquid phase.

10. A float switch according to Claim 9, wherein the orientation control element includes a second conductivity sensor.

11. A discriminating pump assembly for use in containers capable of containing both a conductive liquid and a non-conductive liquid, the pump assembly including a liquid pump and a conductivity sensing float switch as defined in any of Claims 1 to 10 which controls the operation of the pump.

12. A discriminating pump assembly according to Claim 11, wherein the float switch includes a control assembly having at least one electrical input and an electrical output connected directly or indirectly to the pump, wherein the electrical output controls the operation of the pump.

13. A discriminating pump assembly according to Claim 11 or Claim 12, wherein the float switch includes a control assembly having an electrical output which is determined by one or more input signals, the control assembly further including a delay circuit that is adapted to maintain electrical power to the pump for a pre-determined period of time after the input signals correspond to a zero electrical current for the output.

14. A discriminating pump assembly according to Claim 13, wherein the float switch includes an orientation control element which carries a second conductivity sensor and the second conductivity sensor forms part of the delay circuit.

15. A method of pumping a conductive liquid from a container without pumping a non-conductive liquid with a lower specific gravity, the method including:
providing the container with a conductivity sensing float switch according to any of Claims 1 to 10 and a pump;
electrically energising the pump when the float switch indicates that the level of a conductive liquid has reached or exceeded a pre-determined threshold;
and
electrically isolating the pump when the level of the conductive liquid falls below a second pre-determined threshold.
